# FASCICULE DE BREVET EUROPEEN

(11) **EP 3 599 396 B1**
(45) Date de publication et mention de la délivrance du brevet: **30.09.2020**
(21) Numéro de dépôt: 19184895.1
(22) Date de dépôt: 08.07.2019
(51) Int. Cl.: F16H 57/04, F02C 7/36

(54) **DISPOSITIF DU TYPE REDUCTEUR OU DIFFERENTIEL POUR UNE TURBOMACHINE D'AERONEF**
VORRICHTUNG VOM TYP UNTERSETZUNGS- ODER DIFFERENZIALGETRIEBE FÜR EIN TURBOTRIEBWERK EINES LUFTFAHRZEUGS
REDUCER OR DIFFERENTIAL TYPE DEVICE FOR A TURBINE ENGINE OF AN AIRCRAFT

(30) Priorité: 26.07.2018 FR 1856981
(43) Date de publication de la demande: 29.01.2020
(73) Titulaire: Safran Transmission Systems, 92700 Colombes (FR)
(72) Inventeur: SIMON, Adrien Louis, 77550 Moissy-Cramayel (FR); DI GIOVANNI, Jean-Charles Michel Pierre, 77550 Moissy-Cramayel (FR); MORELLI, Boris Pierre Marcel, 77550 Moissy-Cramayel (FR); RAPPAPORT, Florian, 77550 Moissy-Cramayel (FR)
(74) Mandataire: Gevers & Orès

(56) Documents cités:
- EP-A2- 2 333 250
- DD-A1- 243 739
- GB-A- 2 234 035

## Description

### Domaine de l'invention

La présente invention concerne le domaine des réducteurs de vitesse ou des différentiels mécaniques pour une turbomachine en particulier d'aéronef.

### Etat de la technique

L'état de l'art comprend notamment les documents WO-A1-2010/092263, FR-A1-2 987 416, EP-A2-2 333 250, GB-A-2 234 035 et FR-A1-3 041 054.

Les turbomachines actuelles, notamment les turbomachines comportant une ou plusieurs hélices soufflant un flux secondaire, comprennent un système de transmission, appelé réducteur, pour entraîner cette ou ces hélices à la bonne vitesse de rotation à partir de l'arbre de la turbine de puissance du corps primaire du moteur.

Le fonctionnement des réducteurs, en particulier sur des turbomachines avec hélice de soufflante à fort taux de dilution, nécessite un débit d'huile particulièrement important, de l'ordre de 6000 à 7000 litres par heure au décollage, pour assurer la lubrification et le refroidissement de leurs pignons et paliers.

Parmi les réducteurs utilisés, on trouve les réducteurs planétaire et (à train) épicycloïdal qui ont l'avantage d'offrir des taux de réduction importants de la vitesse de rotation dans des encombrements réduits.

Un tel réducteur comprend un pignon planétaire ou pignon central, appelé solaire, une couronne extérieure et des pignons satellites, appelés satellites, qui sont en prise avec le solaire et avec la couronne, le support de l'un de ces trois composants devant être bloqué en rotation pour le fonctionnement du train d'engrenages en tant que réducteur.

Lorsque le porte-satellites est fixe en rotation, le solaire et la couronne sont menant et mené, respectivement, ou inversement. Le réducteur est alors du type « planétaire ».

Dans le cas inverse, le plus fréquent, d'un réducteur à train épicycloïdal, la couronne extérieure est fixe en rotation et le solaire et le porte-satellites sont menants et menés.

Cette même structure peut être utilisée pour réaliser un différentiel mécanique. Dans ce cas, les trois composants (solaire, satellites et couronne) sont mobiles en rotation.

Cependant, ce type de réducteur ou différentiel présente des inconvénients liés à sa lubrification.

Dans la technique actuelle, un satellite est en général guidé en rotation par un palier lisse qui s'étend autour d'un support tubulaire du porte-satellites, ce support tubulaire comportant une cavité interne de réception d'huile et des orifices sensiblement radiaux traversants de passage d'huile depuis la cavité interne jusqu'au palier lisse. Une autre solution de guidage serait l'utilisation de paliers à éléments roulants ou roulements.

La chaleur générée par le passage des éléments mobiles d'un roulement doit être transférée le plus efficacement possible à un fluide caloporteur (ici de l'huile). Afin d'optimiser les performances (rendements), il est préférable d'avoir deux températures d'huile différentes : l'une, pour les roulements, et l'autre, pour les dentures. A ce jour, la seule façon d'obtenir deux températures d'huile différentes revient à dupliquer les circuits d'huile.

La présente invention propose un perfectionnement à cette technologie avec une solution simple, efficace et économique à ce problème.

### Exposé de l'invention

L'invention concerne un dispositif du type réducteur ou différentiel pour une turbomachine d'aéronef, comportant un solaire central d'axe X de rotation, une couronne s'étendant autour de l'axe X et du solaire, et un porte-satellites de support d'une rangée annulaire de satellites disposés entre le solaire et la couronne, et engrenés avec le solaire et la couronne, les satellites ayant des axes de rotation Y sensiblement parallèles audit axe X, ledit solaire comportant des moyens d'accouplement à un arbre de la turbomachine et au moins l'un parmi le porte-satellites et la couronne comportant des moyens de liaison à un autre arbre de la turbomachine, chacun desdits satellites étant guidé en rotation par au moins un palier s'étendant autour d'un support tubulaire d'axe Y dudit porte-satellites, ce support tubulaire comportant une cavité interne de réception d'huile et des orifices sensiblement radiaux traversants de passage d'huile depuis une surface annulaire interne dudit support tubulaire jusqu'audit au moins un palier, un organe d'acheminent d'huile étant monté dans ladite cavité et comprenant au moins une conduite d'huile qui est destinée à être reliée à des moyens d'alimentation en huile et qui est raccordée à une bague qui s'étend autour de l'axe Y et qui délimite avec ladite surface annulaire interne un espace annulaire de circulation d'huile, l'huile étant destinée à s'écouler depuis ladite au moins une conduite, dans ledit espace pour former un film d'huile au contact dudit support tubulaire, puis à traverser lesdits orifices, ledit organe étant caractérisé en ce qu'il comprend une première conduite axiale s'étendant le long de l'axe Y et au moins une seconde conduite radiale s'étendant entre la première conduite et ladite bague, ladite première conduite étant formée dans une portion cylindrique de l'organe, et ladite au moins une seconde conduite étant formée dans un disque de liaison de ladite portion cylindrique à la périphérie interne de la bague.

Le dispositif peut ainsi être un réducteur du type planétaire ou épicycloïdal ou bien un différentiel mécanique. L'invention propose de réchauffer l'huile avant la lubrification du palier. Pour cela, il est proposé de faire circuler l'huile « froide » au contact du support tubulaire et à l'intérieur de celui-ci. L'huile est ainsi destinée à former un film d'huile qui s'échauffe au contact du support tubulaire et arrive donc « chaude » au palier, à une température prédéterminée pour un rendement optimal tout en ayant évacué la chaleur du palier. L'invention propose ainsi de n'utiliser qu'un circuit d'huile au lieu des deux préconisés actuellement en utilisant les pertes au palier pour réchauffer l'huile avant son arrivée au palier.

Le dispositif selon l'invention peut comprendre une ou plusieurs des caractéristiques suivantes, prises isolément les unes des autres, ou en combinaison les unes avec les autres :
- ledit disque est relié sensiblement au milieu de ladite bague,
- les conduites peuvent être réalisées par usinage ou toute autre technique appropriée,
- ladite portion cylindrique est reliée par une extrémité axiale audit disque et par une extrémité axiale opposée à un autre disque dont la périphérie externe est en appui radial sur une surface cylindrique interne dudit support tubulaire ; ceci permet de garantir un positionnement précis de l'organe dans le support, et de limiter les risques de déplacements relatifs de ces pièces en fonctionnement,
- ladite extrémité axiale opposée comprend un port de raccordement auxdits moyens d'alimentation ; le port peut coopérer par emboîtement mâle-femelle avec les moyens d'alimentation en huile,
- ladite bague est cylindrique et ledit espace a une épaisseur sensiblement constante sur toute sa longueur ; on comprend ainsi que le film d'huile a une épaisseur sensiblement constante, cette épaisseur étant par exemple déterminée en fonction de la viscosité de l'huile de façon à absorber une certaine quantité de chaleur du palier en fonctionnement,
- ladite bague a en section axiale une forme biconique et comprend deux parties tronconiques reliées ensemble et à ladite au moins une conduite par leurs extrémités de plus petit diamètre, la forme biconique de la bague permet de faciliter l'écoulement et le guidage de l'huile en fonctionnement,
- lesdites parties tronconiques ont un angle α₀ prédéterminé par rapport à ladite surface annulaire interne, et la bague est configurée de sorte que ledit film d'huile ait une épaisseur eo prédéterminée,
- au moins un joint d'étanchéité est monté entre chaque extrémité axiale de la bague et la surface annulaire interne dudit support tubulaire ; le joint est par exemple torique et assure une étanchéité à l'huile entre la bague et le support,
- ledit organe est formé d'une seule pièce ; ceci facilite le montage de l'organe,
- lesdits paliers sont du type à roulements, et comprennent de préférence au moins deux rangées annulaires de roulements disposés l'une à côté de l'autre ; en variante, il pourrait y avoir trois paliers ou plus disposés les uns à côté des autres,
- le support comprend des nervures annulaires radialement externes qui définissent entre elles notamment des rainures annulaires externes de réception des rangées de roulements, au moins certains desdits orifices s'étendant jusque dans les nervures et/ou débouchant au fond desdites rainures ; on comprend ainsi que les bagues internes des paliers sont formées d'une seule pièce avec le support annulaire, ce qui est avantageux et simplifie le montage.

La présente invention concerne en outre une turbomachine d'aéronef, caractérisée en ce qu'elle comprend au moins un dispositif tel que décrit ci-dessus.

### Brève description des figures

D'autres caractéristiques et avantages ressortiront de la description qui suit d'un mode de réalisation non limitatif de l'invention en référence aux dessins annexés sur lesquels :
- la figure 1 est une vue schématique en coupe axiale d'une turbomachine utilisant l'invention,
- la figure 2 est une vue en coupe axiale d'un réducteur de vitesse,
- la figure 3 est une vue écorchée en perspective du réducteur,
- la figure 4 est une vue en coupe d'un dispositif du type réducteur ou différentiel, dont les paliers de guidage des satellites sont à roulements,
- la figure 5 est une vue en coupe et en perspective d'une partie du dispositif de la figure 4 ;
- la figure 6 est une vue en coupe d'un dispositif du type réducteur ou différentiel, équipé d'un organe d'acheminement d'huile selon un mode de réalisation de l'invention, et
- la figure 7 est une vue en coupe d'un dispositif du type réducteur ou différentiel, équipé d'un organe d'acheminement d'huile selon une variante de réalisation de l'invention.

### Description détaillée d'un mode de réalisation de l'invention

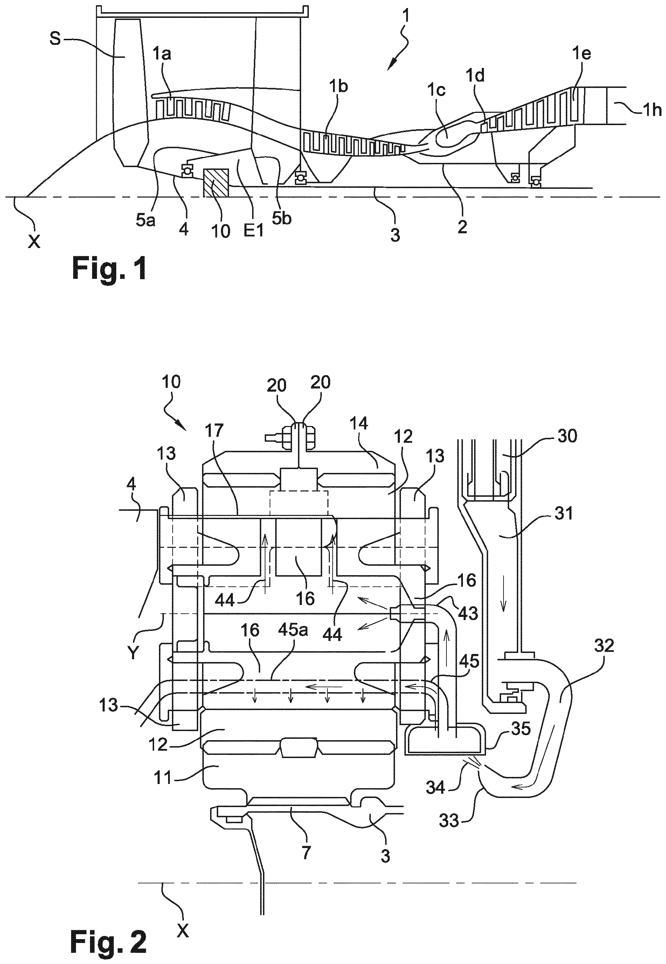

La figure 1 montre une turbomachine 1 qui comporte, de manière classique, une hélice de soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et 1a turbine basse pression 1e sont reliés par un arbre basse pression 3 et forment avec lui un corps basse pression (BP).

L'hélice de soufflante S est entraînée par un arbre de soufflante 4 qui est couplé à l'arbre BP 3 au moyen d'un réducteur 10 à train épicycloïdal, planétaire ou différentiel, représenté ici schématiquement.

Le réducteur 10 est positionné dans la partie avant de la turbomachine. Une structure fixe comportant schématiquement, ici, une partie amont 5a et une partie aval 5b est agencée de manière à former une enceinte E1 entourant le réducteur 10. Cette enceinte E1 est ici fermée en amont par des joints au niveau d'un palier permettant la traversée de l'arbre de soufflante 4, et en aval par des joints au niveau de la traversée de l'arbre BP 3.

En référence à la figure 2, le réducteur 10 comprend une couronne 14 qui est fixée par l'intermédiaire d'un porte-couronne (non représenté) à la structure fixe 5a, 5b avec des moyens souples agencés pour lui permettre de suivre les mouvements éventuels de l'arbre de soufflante 4, dans certains cas de fonctionnement dégradés par exemple. Dans une architecture planétaire, le porte-couronne est composé d'une partie plus ou moins souple qui entraine la couronne et d'une partie maintenue par des roulements ou des paliers et sur lequel vient se monter la soufflante. Ces moyens de fixation sont connus de l'homme du métier et ne sont pas détaillés ici. Une brève description peut en être trouvée par exemple dans FR-A1-2987416.

Le réducteur 10 est connecté à l'arbre BP 3 par l'intermédiaire de cannelures 7 qui entraînent un pignon d'engrenage planétaire ou solaire 11, et d'autre part sur l'arbre de soufflante 4 qui est attaché à un porte-satellites 13. Classiquement, le solaire 11, dont l'axe de rotation X est confondu avec celui de la turbomachine, entraîne une série de pignons de satellites ou satellites 12, qui sont répartis régulièrement sur la circonférence du réducteur 10. Le nombre de satellites 12 est généralement défini entre trois et sept. Les satellites 12 tournent aussi autour de l'axe X de la turbomachine sauf dans le cas d'un planétaire où ils tournent uniquement autour de leurs axes de révolution Y, en engrenant sur une denture interne chevron de la couronne 14, qui est fixée à un stator de la turbomachine par l'intermédiaire de brides 20 dans le cas d'un épicycloïdal ou fixé à un rotor de la turbomachine dans le cas d'un planétaire. Chacun des satellites 12 tourne librement autour d'un axe Y défini par un support tubulaire 16 porté par le porte-satellite 13, à l'aide d'un palier 17 qui est en général lisse dans la technique actuelle.

La rotation des satellites 12 autour de l'axe Y, du fait de la coopération de leurs dentures avec la denture de la couronne 14, entraîne la rotation du porte-satellites 13 autour de l'axe X, et par conséquent celle de l'arbre de soufflante 4 qui lui est lié, à une vitesse de rotation qui est inférieure à celle de l'arbre BP 3.

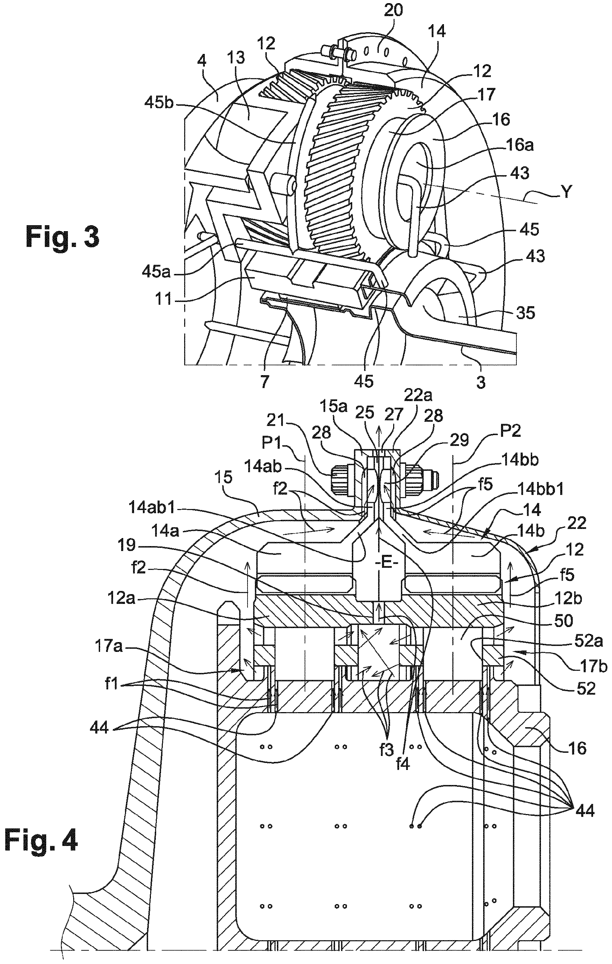

La figure 2 montre, avec la figure 3, l'acheminement de l'huile vers le réducteur 10 et son cheminement à l'intérieur de celui-ci. Des flèches montrent sur la figure 2 le cheminement suivi par l'huile depuis, sur cet exemple, un réservoir tampon 31 lié à la structure fixe de la turbomachine, jusqu'aux pignons et aux paliers 17 à lubrifier.

Le dispositif de lubrification comporte schématiquement trois parties qui vont être décrites ci-après successivement, une première partie liée à la structure fixe et délivrant l'huile vers les parties tournantes du réducteur 10, un rouet tournant avec le porte-satellites 13 réceptionnant cette huile, et des circuits de distribution d'huile alimentés en huile par le rouet pour l'acheminer vers les endroits à lubrifier. La première partie comporte au moins un injecteur 32 dont l'extrémité calibrée est resserrée pour former un gicleur 33. L'huile est amenée vers l'injecteur par une canalisation d'acheminement 30, en provenance du réservoir du moteur (non représenté). Un réservoir tampon 31 peut être interposé à côté du réducteur 10 sur la canalisation, de préférence en partie haute de façon à ce que l'huile puisse s'écouler vers le centre du réducteur par gravité. Le gicleur 33 éjecte l'huile sous la forme d'un jet 34, qui se forme sous la pression produite conjointement par la pompe d'alimentation (non représentée) et par le poids de la colonne d'huile située au-dessus de lui. Le gicleur 33 est positionné ici radialement à l'intérieur du porte-satellites 13 par rapport à l'axe X et le jet 34 est orienté avec une composante radiale dirigée vers l'extérieur du réducteur 10. En référence à la figure 3, le rouet de réception de l'huile lié au porte-satellites 13 comporte essentiellement une coupelle cylindrique, ici à section en U, dont l'ouverture en U est orientée en direction de l'axe de rotation X. Le rouet est agencé sur le porte-satellites 13 de manière à ce que le fond du U de la coupelle 35 recueille le jet d'huile 34 éjecté par le gicleur 33.

Les circuits de distribution d'huile sont ici de deux types. Une première série de circuits de distribution d'huile correspond à des premières canalisations 43, qui sont réparties régulièrement sur la circonférence du réducteur 10 et en nombre égal à celui des satellites 12. Ces canalisations 43 partent radialement de la coupelle 35 et pénètrent dans la cavité interne 16a de chaque support 16 (figure 3), qui est refermée par le porte-satellites 13. L'huile qui circule dans les premières canalisations 43 pénètre dans la cavité interne 16a puis passe, du fait de la force centrifuge, dans des orifices 44, qui traversent chaque support 16 en étant orientés radialement. Ces orifices 44 débouchent à la périphérie des supports 16, au niveau des paliers supportant les pignons des satellites 12 et assurent ainsi la lubrification de ces paliers. La deuxième série de circuits de distribution d'huile comprend des secondes canalisations 45 qui cheminent, depuis la coupelle 35 entre les satellites 12 et se divisent en plusieurs canaux 45a, 45b. Les canaux 45a, 45b acheminent l'huile vers les engrenages formés par les pignons des satellites 12 et le solaire 11, d'une part, et les pignons des satellites 12 et la couronne externe 14, d'autre part. Chaque canal 45a s'étend axialement le long des pignons d'un satellite 12, entre ceux-ci et le solaire 11, et forme une rampe de lubrification sur toute la largeur des pignons. Le canal 45b, qui alimente l'engrenage entre la couronne 14 et les pignons des satellites 12, projette son huile au centre du cylindre formé par chaque satellite 12. Comme représenté, chaque satellite 12 est réalisé sous la forme de deux pignons parallèles qui engrènent respectivement avec deux demi-couronnes de la couronne 14 (figure 3). Les hélices de la denture de chaque satellite sont orientées en diagonale par rapport à l'axe Y de rotation du satellite 12, de façon à leur donner une fonction de rainures dans lesquelles l'huile est entraînée, depuis le milieu du cylindre jusqu'à sa périphérie, pour lubrifier l'engrenage sur toute sa largeur.

Bien que la description qui précède concerne un réducteur du type planétaire ou épicycloïdal, elle s'applique à un différentiel mécanique dans lequel les trois composants, que sont le porte-satellites 13, la couronne 14 et le solaire 11, sont mobiles en rotation, la vitesse de rotation de l'un de ces composants dépendant de la différence de vitesses des deux autres composants notamment.

La figure 4 montre le cas où les satellites 12 d'un dispositif du type réducteur ou différentiel sont centrés et guidés en rotation sur les supports tubulaires 16 du porte-satellites 13, par un palier à une ou plusieurs rangées d'éléments roulants 17a, 17b. Les rangées d'éléments roulants 17a, 17b sont appelées « paliers » dans ce qui suit.

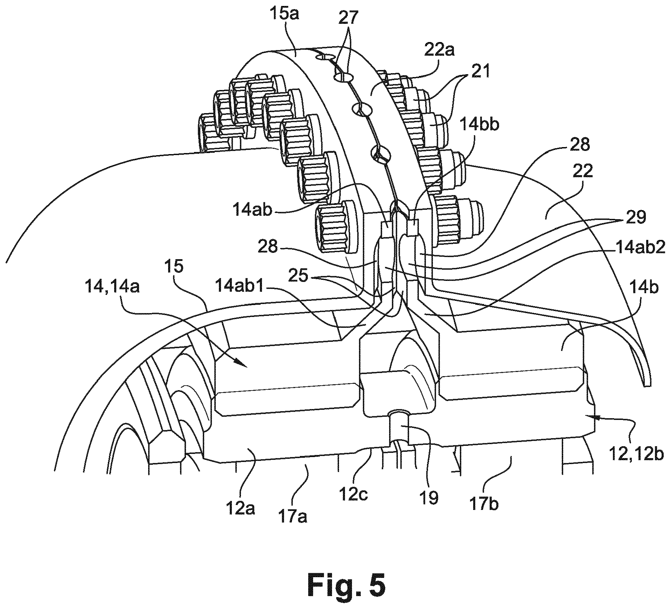

Sur les exemples des figures 4 et 5, chaque support 16 est entouré par les deux paliers 17a, 17b qui sont à rouleaux dans l'exemple représenté. Dans notre exemple, chaque palier 17a, 17b est associé à une hélice 12a, 12b de la denture chevron du satellite 12 qui est lui-même engrené avec deux demi-couronnes 14a, 14b, comme évoqué dans ce qui précède. Autrement dit, les paliers 17a, 17b sont coaxiaux et disposés l'un à côté de l'autre, chaque palier étant situé dans un plan médian P1, P2 passant sensiblement par le plan médian de chaque hélice 12a, 12b du pignon satellite 12 et par le plan médian de l'hélice d'une demi-couronne 14a ou 14b. Les plans P1 et P2 sont parallèles entre eux et perpendiculaires à l'axe Y. Le nombre de paliers 17a, 17b peut être différent à l'exemple présenté. Il ne dépend pas obligatoirement du nombre d'hélices 12a, 12b, 14a, 14b d'une denture chevron.

Chaque palier 17a, 17b comprend une rangée annulaire de roulements 50 (rouleaux) agencée dans une cage 52 qui est formée par un anneau cylindrique comportant une rangée annulaire de lumières 52a traversantes de réception des roulements. Les cages 52 sont indépendantes et écartées axialement l'une de l'autre. Dans le cas illustré dans les dessins, les bagues ou pistes interne et externe de chaque palier sont formées d'une seule pièce avec le support 16, d'une part, et le satellite 12, d'autre part.

Comme on le voit à la figure 4, les paliers 17a, 17b sont à distance axiale l'un de l'autre. C'est également le cas des hélices 12a, 12b du pignon satellite 12 et des hélices des demi-couronnes 14a, 14b. Les hélices 12a, 12b sont reliées par un voile cylindrique de matière qui comprend une rangée annulaire de perçages radiaux 19 nécessaires à l'écoulement de l'huile en fonctionnement pour ne pas avoir de perçage dans la denture chevron. Chaque demi-couronne 14a, 14b comprend un corps annulaire de forme générale cylindrique et relié à une bride annulaire 14ab, 14bb s'étendant radialement vers l'extérieur. Chaque corps comprend une hélice interne. Bien que cela ne soit pas visible sur les dessins, les hélices des demi-couronnes, sont complémentaires des hélices 12a, 12b du satellite, qui sont elles du type représenté à la figure 3. Les hélices des deux demi-couronnes 14a, 14b sont ainsi en chevron.

Le corps de chaque demi-couronne est relié par une de ses extrémités longitudinales à la bride 14ab, 14bb correspondante par l'intermédiaire d'un rebord annulaire 14ab1, 14bb1.

Chaque bride 14ab, 14bb s'étend sensiblement en direction radiale et est en appui sur l'autre bride dans un plan de joint sensiblement radial. Les rebords 14ab1, 14bb1 ont ici une forme générale tronconique et convergent ici l'un vers l'autre radialement vers l'extérieur.

Les brides 14ab, 14bb servent à fixer les demi-couronnes 14a, 14b entre elles, ainsi qu'à un porte-couronne 15 et à un récupérateur d'huile 22 dans l'exemple représenté.

Pour cela, les brides 14ab, 14bb comprennent chacune une rangée annulaire d'orifices axiaux traversants de passage de moyens de fixation 21 du type vis-écrou ou analogues. Les orifices des brides sont alignés et reçoivent les moyens de fixation 21.

Le porte-couronne 15 comprend également une bride annulaire 15a de fixation aux brides 14ab, 14bb. La bride 15a est appliquée axialement sur l'une des brides 14ab, 14bb, à savoir ici la bride 14ab dans l'exemple représenté. La bride 14ab est ainsi intercalée axialement entre la bride 15a et la bride 14bb. L'inverse est aussi possible.

La bride 15a comprend des orifices alignés avec les orifices des brides 14ab, 14bb et qui reçoivent également les moyens de fixation 21, dont des têtes peuvent être appliquées axialement sur la face amont de la bride 15a et des écrous peuvent être appliqués axialement sur la face aval de la bride 14bb ou inversement. Dans l'exemple représenté, une bride 22a du récupérateur annulaire 22 d'huile est en appui axial sur la bride 14bb et reçoit sur sa face aval les têtes des écrous. La bride 22a comprend des orifices alignés avec les orifices des brides 14ab, 14bb, 15a et qui reçoivent également les moyens de fixation 21.

Les rebords 14ab1, 14bb1 délimitent un espace annulaire E qui a ici une section de forme générale triangulaire, dont la pointe est orientée radialement vers l'extérieur.

Du fait de la forme des rebords 14ab1, 14bb1 et de leur liaison aux extrémités longitudinales, respectivement aval et amont, des corps des demi-couronnes, ces corps sont écartés axialement l'un de l'autre d'une distance prédéterminée.

La distance axiale inter-hélices 12a, 12b peut être dû à une contrainte de fabrication. Chaque satellite comporte une piste intérieure de roulement. Pour réduire la surface précise à usiner au juste besoin, cette surface cylindrique intérieure est divisée en plusieurs pistes de largeur axiale réduite dont le nombre est égal au nombre de paliers 17a, 17b. Cela permet d'obtenir une rainure annulaire 12c de récupération d'huile entre les pistes, de diminuer la masse car le satellite subit moins de contraintes à cet endroit et de diminuer la difficulté de réalisation sur des éléments demandant une très grande précision car plusieurs pistes sont réalisées indépendamment les unes des autres et la surface totale de grande précision est plus petite avec les rainures entre chaque piste. Les perçages 19 sont formés au fond de cette rainure 12c.

L'huile de lubrification est destinée à s'écouler en fonctionnement à travers l'espace inter-corps E. Des passages sensiblement radiaux sont prévues entre les brides 14ab, 14bb afin d'autoriser l'évacuation de l'huile radialement vers l'extérieur de la couronne 14.

Les passages d'huile sont ici formés d'une part par des lunules 25 sensiblement radiales formées dans les surfaces en regard des brides 14ab, 14bb. Chaque bride 14ab ,14bb comprend une rangée annulaire de lunules 25 alignées axialement avec des lunules 25 de l'autre des brides. Les lunules sont réalisées à distance des orifices de passage des moyens de fixation 21. Chaque lunule a par exemple en section une forme semi-circulaire (demi-oblongue) ou rectangulaire.

Les lunules 25 sont en communication fluidique, à leurs extrémités radialement internes, avec l'espace E, et à leurs extrémités axialement externes avec des encoches 27 de sortie d'huile prévues sur des rebords cylindriques situés à la périphérie externes des brides 15a, 22a (figure 4). Des passages d'huile sont en outre formés par des lunules 28 sensiblement radiales formées dans les surfaces d'appui des brides 22a, 15a (figure 4). Chaque bride 22a, 15a comprend une rangée annulaire de lunules 28. Les lunules 28 sont réalisées à distance des orifices de passage des moyens de fixation 21 et communiquent avec des orifices traversants 29 prévus au fond des lunules 25 des brides 14ab, 14bb. Chaque lunule a par exemple en section une forme semi-circulaire (demi-oblongue) ou rectangulaire.

L'huile qui traverse les orifices 44 du support 16 (flèches f1), lubrifie les paliers 17a, 17b et doit ensuite s'écouler radialement à l'extérieur de ceux-ci. La lubrification va servir à refroidir les éléments roulants ainsi que la cage 52. Une fois les éléments refroidis, la lubrification se retrouve sur l'un des trois chemins possibles :
- Chemin N°1 - flèches f2
   L'huile de lubrification est éjectée du côté avant du réducteur (ou par l'extrémité gauche du roulement sur le dessin), et remonte dans le porte-couronne 15 jusqu'aux lunules 28 ; elle est ensuite transférée via les orifices 29 entre les brides 14ab, 14bb des demi-couronnes pour se retrouver éjectée par les encoches 27 ;
- Chemin N°2 - flèches f3 et f4
   L'huile de lubrification est piégée entre les paliers 17a, 17b ; à l'aide des effets centrifuges, de la gravité et de la ventilation, l'huile de lubrification se retrouve dans la rainure circulaire 12c située entre les deux pistes intérieures de roulage (flèches f3) puis sort du satellite 12 via les perçages 19 pour arriver dans l'espace E formé par les deux demi-couronnes assemblées (flèches f4) ; au bout de cette cavité se trouve les lunules 25 et les encoches 27 pour l'éjection de l'huile du réducteur par l'effet centrifuge de la couronne en rotation ;
- Chemin N°3 - flèches f5
   L'huile de lubrification est éjectée du côté arrière du réducteur (ou par l'extrémité droite du roulement sur le dessin), et remonte dans le récupérateur d'huile 22 jusqu'aux lunules 28 ; elle est ensuite transférée via les orifices 29 de la bride de la demi-couronne arrière pour se retrouver éjectée par la voie centrale formée par les encoches 27 des deux demi-couronnes assemblées.

Dans le cas représenté à la figure 4, l'écoulement de l'huile depuis les orifices 44 jusqu'à l'espace E n'est pas optimisé. L'huile du chemin N°2 risque de stagner et de diminuer l'efficacité de lubrification et de refroidissement des paliers 17a, 17b. Les cages 52 des paliers 17a, 17b comprennent des bords périphériques en regard qui sont identiques et à distance axiale l'un de l'autre, et qui ne sont pas adaptés au guidage de l'huile en fonctionnement.

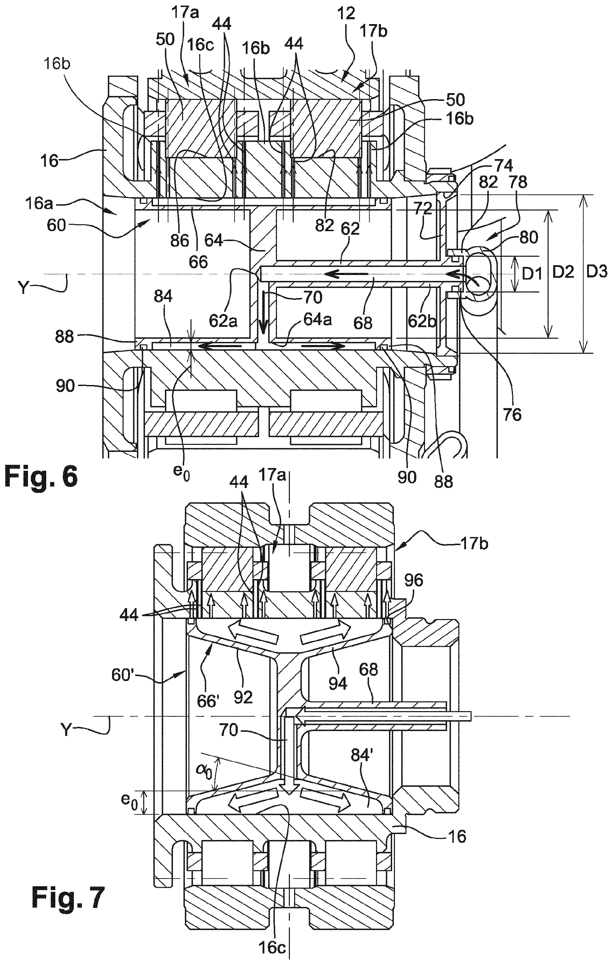

Les figures 6 et 7 illustrent deux modes de réalisation de l'invention. Cette invention s'applique à un réducteur ou différentiel tel que décrit dans ce qui précède.

Dans ces modes de réalisation, le dispositif est équipé d'un organe 60 d'acheminent d'huile qui est monté dans la cavité 16a de chaque support tubulaire 16.

L'organe 60 comprend essentiellement trois parties à savoir une portion cylindrique 62, un disque 64 et une bague 66. L'organe 60 est ici formé d'une seule pièce bien que cette caractéristique ne soit pas limitative.

La portion 62 s'étend le long de l'axe Y et a un diamètre externe D1. Elle comprend une conduite interne 68, appelée première conduite, qui s'étend le long de l'axe Y sur la quasi-totalité de la longueur de la portion 62 dans l'exemple représenté.

La portion 62 a une extrémité axiale 62a reliée au centre du disque 64 dont la périphérie externe est reliée à la bague 66. Le disque 64 s'étend dans un plan sensiblement perpendiculaire à l'axe Y et comprend une conduite interne 70, appelée seconde conduite, qui s'étend radialement et dont l'extrémité radialement interne est reliée à l'extrémité axiale de la conduite 68 située au niveau de l'extrémité 62a, et dont l'extrémité radialement externe débouche sur une surface annulaire externe 64a du disque.

Le disque 64 est relié sensiblement au milieu de la bague 66 (le long de l'axe Y) si bien que la conduite 70 débouche sensiblement au milieu de la bague 66. Le disque 64 pourrait comprendre plusieurs conduites radiales 70 régulièrement espacées autour de l'axe Y.

La portion 62 a une extrémité axiale opposée 62b reliée au centre d'un autre disque 72 dont la périphérie externe est en appui radialement sur une surface cylindrique interne 74 du support 16, qui est ici située à une extrémité axiale de ce dernier. La portion 62 se prolonge axialement au-delà du disque 72 pour former un port 76 de raccordement de la conduite 68 à des moyens d'alimentation 78.

Les moyens d'alimentation 78 comprennent par exemple une rampe annulaire 80 raccordée à une source d'huile de lubrification et comportant une rangée annulaire de raccords 82 emboîtés sur les ports 76 des organes 60 montés dans les différents supports 16. La rampe 80 s'étend ici autour de l'axe X. Des joints toriques d'étanchéité peuvent être prévus entre les ports 76 et les raccords 82 de la rampe 80.

La bague 66 s'étend autour de l'axe Y et délimite avec une surface annulaire interne 16c du support 16 un espace annulaire 84 de circulation d'huile.

Comme évoqué dans ce qui précède, ces orifices 44 traversent radialement la paroi tubulaire du support 16. Dans l'exemple représenté, le support 16 comprend des nervures annulaires 16b radialement externes qui définissent entre eux des rainures annulaires externes 86 de réception des roulements 50. Les nervures 16b servent ainsi de butées axiales aux éléments roulants des paliers 17a, 17b. Au moins certains des orifices 44 s'étendent jusqu'aux extrémités libres radialement externes des nervures 16b. D'autres s'étendent jusque dans les rainures 86. Les extrémités radialement internes des orifices 44 débouchent sur la surface 16c.

La longueur de la bague 66 est déterminée de façon à ce que tous les orifices 44 débouchent dans l'espace 84. Dans l'exemple représenté, elle a une longueur qui représente 50 à 80% de celle du support 16, mesurée le long de l'axe Y.

La bague 66 de la figure 6 a une forme générale cylindrique et s'étend à une distance radiale prédéterminée de la surface 16c. Cette distance permet de définir une épaisseur eo d'un film d'huile destiné à être formé entre la bague 66 et le support 16. L'épaisseur eo est sensiblement constante sur la longueur du film.

La bague a un diamètre interne D2 nettement supérieur à D1 et un diamètre externe D3 qui est sensiblement égal au diamètre interne de la surface 16c ou légèrement inférieur à ce dernier.

La bague 66 comprend un rebord annulaire 88 radialement externe à chacune de ses extrémités axiales. Chaque rebord 88 comprend une rainure annulaire 90 débouchant radialement vers l'extérieur et dans laquelle est destiné à être logé un joint annulaire d'étanchéité destiné à coopérer avec la surface 16c.

Les flèches de la figure 6 montrent le cheminement de l'huile depuis les moyens d'alimentation jusqu'aux paliers 17a, 17b. L'huile sort de la rampe 80 et pénètre dans la conduite 68 via le port 76. Elle s'écoule dans les conduites 68, 70 puis pénètre dans l'espace 84 pour former le film d'huile. L'huile s'écoule le long de la surface 16c et s'échauffe au contact du support 16 du fait de la chaleur générée par les paliers 17a, 17b en fonctionnement. L'huile ainsi chauffée traverse ensuite les orifices 44 pour rejoindre les paliers 17a, 17b en vue de leur lubrification.

L'organe 60' du mode de réalisation de la figure 7 diffère de l'organe 60 décrit dans ce qui précède essentiellement en ce que sa bague 66' a une forme différente.

La bague 66' a en section axiale une forme biconique et comprend deux parties tronconiques 92, 94 reliées ensemble et au disque 64 par leurs extrémités de plus petit diamètre. La bague présente un plan de symétrie passant par le disque 64 et perpendiculaire à l'axe Y.

Chaque partie tronconique 92, 94 est inclinée d'un angle α₀ prédéterminé par rapport à la surface 16c, cet angle étant mesuré dans un plan axial tel que le plan de coupe de la figure 7.

L'organe 60' du mode de réalisation de la figure 7 diffère en outre de l'organe 60 en ce que la bague 66' prend appui axialement par l'intermédiaire de l'une de ses extrémités axiales contre un épaulement annulaire interne 96 du support 16. Bien que le port 76 de raccordement de l'organe 60' aux moyens d'alimentation en huile ne soit pas représenté, l'organe 60' comprend bien un tel port.

Les flèches de la figure 7 montrent le cheminement de l'huile depuis les moyens d'alimentation jusqu'aux paliers 17a, 17b. L'huile s'écoule dans les conduites 68, 70 puis pénètre dans l'espace 84' pour former le film d'huile d'épaisseur moyenne eo. L'huile s'écoule le long de la surface 16c et s'échauffe au contact du support 16 du fait de la chaleur générée par les paliers 17a, 17b en fonctionnement. L'huile ainsi chauffée traverse ensuite les orifices 44 pour rejoindre les paliers 17a, 17b en vue de leur lubrification. A titre d'exemple, un premier dimensionnement dans les conditions de lubrification et avec les estimations de pertes au palier actuelles donne une augmentation potentielle de température de l'huile comprise entre 10°C et 60°C en jouant sur le film d'huile par son épaisseur moyenne eo et son angle ao. Les calculs de rendement estiment qu'une température de lubrification des roulements supérieure de 40°C à celle des dentures serait bénéfique. L'invention permet notamment de n'utiliser qu'un seul circuit d'huile. Les dentures réclamant une huile moins chaude que les roulements, il est maintenant possible de la réchauffer avant son injection sous les roulements, tout en refroidissant le support tubulaire formant la bague intérieure du palier. Cela représente une économie d'un circuit d'huile et donc des gains de masse et d'efficacité au niveau moteur. L'invention permet également de limiter la masse du dispositif, la seule pièce structurelle étant le support tubulaire, et d'homogénéiser les contraintes dans le support tubulaire par absence de serrage et frettage.

## Revendications

1. Dispositif du type réducteur (10) ou différentiel pour une turbomachine (1) d'aéronef, comportant un solaire central (11) d'axe X de rotation, une couronne (14) s'étendant autour de l'axe X et du solaire, et un porte-satellites (13) de support d'une rangée annulaire de satellites (12) disposés entre le solaire et la couronne, et engrenés avec le solaire et la couronne, les satellites ayant des axes de rotation Y sensiblement parallèles audit axe X, ledit solaire comportant des moyens (7) d'accouplement à un arbre (3) de la turbomachine et au moins l'un parmi le porte-satellites et la couronne comportant des moyens de liaison à un autre arbre (4) de la turbomachine, chacun desdits satellites étant guidé en rotation par au moins un palier (17) s'étendant autour d'un support tubulaire (16) d'axe Y dudit porte-satellites, ce support tubulaire comportant une cavité interne (16a) de réception d'huile et des orifices (44) sensiblement radiaux traversants de passage d'huile depuis une surface annulaire interne (16c) dudit support tubulaire jusqu'audit au moins un palier, un organe (60, 60') d'acheminent d'huile étant monté dans ladite cavité et comprenant au moins une conduite d'huile (68, 70) qui est destinée à être reliée à des moyens (78) d'alimentation en huile et qui est raccordée à une bague (66, 66') qui s'étend autour de l'axe Y et qui délimite avec ladite surface annulaire interne (16c) un espace annulaire (84, 84') de circulation d'huile, l'huile étant destinée à s'écouler depuis ladite au moins une conduite, dans ledit espace pour former un film d'huile au contact dudit support tubulaire, puis à traverser lesdits orifices, ledit organe (60, 60') étant **caractérisé en ce qu'**il comprend une première conduite axiale (68) s'étendant le long de l'axe Y et au moins une seconde conduite radiale (70) s'étendant entre la première conduite et ladite bague (66, 66'), ladite première conduite (68) étant formée dans une portion cylindrique (62) de l'organe (60, 60'), et ladite au moins une seconde conduite (70) étant formée dans un disque (64) de liaison de ladite portion cylindrique à la périphérie interne de la bague (66, 66').

2. Dispositif selon la revendication précédente, dans lequel ledit disque (64) est relié sensiblement au milieu de ladite bague (66, 66').

3. Dispositif selon la revendication 1 ou 2, dans lequel ladite portion cylindrique (62) est reliée par une extrémité axiale audit disque (64) et par une extrémité axiale opposée à un autre disque (72) dont la périphérie externe est en appui radial sur une surface cylindrique interne (74) dudit support tubulaire (16).

4. Dispositif selon la revendication précédente, dans lequel ladite extrémité axiale opposée comprend un port (76) de raccordement auxdits moyens d'alimentation (78).

5. Dispositif selon l'une des revendications précédentes, dans lequel ladite bague (66) est cylindrique et ledit espace (84) a une épaisseur (eo) sensiblement constante sur toute sa longueur.

6. Dispositif selon l'une des revendications 1 à 3, dans lequel ladite bague (66') a en section axiale une forme biconique et comprend deux parties tronconiques (92, 94) reliées ensemble et à ladite au moins une conduite (68, 70) par leurs extrémités de plus petit diamètre.

7. Dispositif selon la revendication précédente, dans lequel lesdites parties tronconiques (92, 94) ont un angle (α₀) prédéterminé par rapport à ladite surface annulaire interne (16c), et la bague (66') est configurée de sorte que ledit film d'huile ait une épaisseur (eo) prédéterminée.

8. Dispositif selon l'une des revendications précédentes, dans lequel au moins un joint d'étanchéité est monté entre chaque extrémité axiale de la bague (66, 66') et la surface annulaire interne (16c) dudit support tubulaire (16).

9. Turbomachine d'aéronef, **caractérisée en ce qu'**elle comprend au moins un dispositif selon l'une des revendications précédentes.

## Patentansprüche

1. Vorrichtung vom Typ Reduktor- (10) oder Differenzialgetriebe für eine Turbomaschine (1) eines Luftfahrzeugs, die ein zentrales Sonnenrad (11) mit Rotationsachse X, einen Kranz (14), der sich um die Achse X und das Sonnenrad erstreckt, und einen Planetenträger (13) zum Tragen einer ringförmigen Reihe von Planeten (12), die zwischen dem Sonnenrad und dem Kranz angeordnet sind und in das Sonnenrad und in den Kranz eingreifen, umfasst, wobei die Planeten Rotationsachsen Y aufweisen, die im Wesentlichen zu der Achse X parallel sind, wobei das Sonnenrad Mittel (7) zum Koppeln an einer Welle (3) der Turbomaschine umfasst, und mindestens einer des Planetenträgers und des Kranzes Mittel zum Verbinden an einer anderen Welle (4) der Turbomaschine umfasst, wobei jeder der Planeten von mindestens einem Lager (17), das sich um einen röhrenförmigen Träger (16) mit Achse Y des Planetenträgers erstreckt, in Drehung geführt ist, wobei dieser röhrenförmige Träger einen Innenhohlraum (16a) zur Aufnahme von Öl und im Wesentlichen radiale durchgehende Öldurchgangsöffnungen (44) von einer ringförmigen Innenoberfläche (16c) des röhrenförmigen Trägers bis zu dem mindestens einen Lager umfasst, wobei ein Organ (60, 60') zum Fördern von Öl in dem Hohlraum montiert ist und mindestens eine Ölleitung (68, 70) umfasst, die dazu bestimmt ist, mit Mitteln (78) zum Versorgen mit Öl verbunden zu sein und die an einen Ring (66, 66') angeschlossen ist, der sich um die Achse Y erstreckt und der mit der ringförmigen Innenoberfläche (16c) einen Ringraum (84, 84') zur Ölzirkulation abgrenzt, wobei das Öl dazu bestimmt ist, von der mindestens einen Leitung in den Raum zu fließen, um einen Ölfilm bei Berührung des röhrenförmigen Trägers zu bilden, dann die Öffnungen zu durchqueren, wobei das Organ (60, 60') **dadurch gekennzeichnet ist, dass** es eine erste axiale Leitung (68) umfasst, die sich entlang der Achse Y erstreckt, und mindestens eine zweite radiale Leitung (70), die sich zwischen der ersten Leitung und dem Ring (66, 66') erstreckt, wobei die erste Leitung (68) in einem zylindrischen Abschnitt (62) des Organs (60, 60') gebildet ist, und die mindestens eine zweite Leitung (70) in einer Scheibe (64) zur Verbindung des zylindrischen Abschnitts mit dem Innenumfang des Rings (66, 66') gebildet ist.

2. Vorrichtung nach dem vorstehenden Anspruch, wobei die Scheibe (64) im Wesentlichen mit der Mitte des Rings (66, 66') verbunden ist.

3. Vorrichtung nach Anspruch 1 oder 2, wobei der zylindrische Abschnitt (62) durch ein axiales Ende mit der Scheibe (64) und durch ein axiales entgegengesetztes Ende mit einer anderen Scheibe (72) verbunden ist, deren Außenumfang in radialer Auflage auf einer zylindrischen Innenoberfläche (74) des röhrenförmigen Trägers (16) liegt.

4. Vorrichtung nach dem vorstehenden Anspruch, wobei das entgegengesetzte axiale Ende einen Anschluss (76) zum Anschließen an die Versorgungsmittel (78) umfasst.

5. Vorrichtung nach einem der vorstehenden Ansprüche, wobei der Ring (66) zylindrisch ist und der Raum (84) eine Dicke (eo) aufweist, die auf ihrer gesamten Länge im Wesentlichen konstant ist.

6. Vorrichtung nach einem der Ansprüche 1 bis 3, wobei der Ring (66') einen axialen Querschnitt in Doppelkegelform aufweist und zwei kegelstumpfförmige Teile (92, 94) umfasst, die miteinander und an der mindestens einen Leitung (68, 70) durch ihre Enden mit kleinerem Durchmesser verbunden sind.

7. Vorrichtung nach dem vorstehenden Anspruch, wobei die kegelstumpfförmigen Teile (92, 94) einen Winkel (α₀) aufweisen, der bezüglich der ringförmigen Innenoberfläche (16c) vorbestimmt ist, und der Ring (66') derart konfiguriert ist, dass der Ölfilm eine vorbestimmte Dicke (eo) aufweist.

8. Vorrichtung nach einem der vorstehenden Ansprüche, wobei mindestens eine Dichtung zwischen jedem axialen Ende des Rings (66, 66') und der ringförmigen Innenoberfläche (16c) des röhrenförmigen Trägers (16) montiert ist.

9. Turbomaschine eines Luftfahrzeugs, **dadurch gekennzeichnet, dass** es mindestens eine Vorrichtung nach einem der vorstehenden Ansprüche umfasst.

## Claims

1. Reduction-type device (10) or differential-type device for an aircraft turbine engine (1), comprising a central sun gear (11) with a rotation axis X, a ring gear (14) extending around the axis X and the sun gear, a planetary carrier (13) supporting an annular row of planet gears (12) arranged between the sun gear and the ring gear, and engaged with the sun gear and the ring gear, the planet gears having rotation axes Y substantially parallel to said axis X, said sun gear (7) comprising means for coupling to a shaft (3) of the turbine engine and at least one of the planetary carrier and the ring gear comprising means to connect to another shaft (4) of the turbine engine, each of said planet gears being rotationally guided by at least one bearing (17) extending around a tubular support (16) of axis Y of said planetary carrier, the tubular support comprising an inner cavity (16a) to receive the oil and substantially radial through-orifices (44) for the passage of the oil from an internal annular surface (16c) of said tubular support to said at least one bearing, an oil-transfer member (60, 60') being mounted in said cavity and comprising at least one oil duct (68, 70) intended to be connected to oil supply means (78) and which is connected to a ring (66, 66') that extends about the axis Y and delimits with said internal annular surface (16c) an annular space (84, 84') for the circulation of oil, the oil being intended to flow from said at least one duct into said space to form a film of oil in contact with said tubular support, and then to pass through said orifices, said member (60, 60') being **characterized in that** it comprises a first axial duct (68) extending along the axis Y and at least a second radial duct (70) extending between the first duct and said ring (66, 66'), said first duct (68) being formed in a cylindrical portion (62) of the member (60, 60'), and said at least one second duct (70) being formed in a disc (64) connecting said cylindrical portion to the inner periphery of the ring (66, 66').

2. Device according to the preceding claim, wherein said disc (64) is connected substantially to the middle of said ring (66, 66').

3. Device according to claim 1 or 2, wherein said cylindrical portion (62) is connected by an axial end to said disc (64) and by an opposite axial end to another disc (72) of which the outer periphery bears radially against an internal cylindrical surface (74) of said tubular support (16).

4. Device according to the preceding claim, wherein said opposite axial end comprises a port (76) for connecting to said supply means (78).

5. Device according to one of the preceding claims, wherein said ring (66) is cylindrical and said space (84) has a substantially constant thickness (eo) over its entire length.

6. Device according to one of the claims 1 to 3, wherein the cross-section of said ring (66') has a biconical shape and comprises two frusto-conical parts (92, 94) connected to one another and to said at least one duct (68, 70) by their smallest diameter ends.

7. Device according to the preceding claim, wherein said frusto-conical parts (92, 94) have a predetermined angle (α₀) with respect to said internal annular surface (16c), and the ring (66') is configured so that said oil film has a predetermined thickness (eo).

8. Device according to one of the preceding claims, wherein at least one gasket is mounted between each axial end of the ring (66, 66') and the internal annular surface (16c) of said tubular support (16).

9. Turbine engine of an aircraft, **characterised in that** it comprises at least one device according to the preceding claims.
